# EUROPÄISCHE PATENTANMELDUNG

(11) **EP 0 740 147 A1**
(43) Veröffentlichungstag der Anmeldung: **30.10.1996**
(21) Anmeldenummer: 96101068.3
(22) Anmeldetag: 25.01.1996
(51) Int. Cl.: G01N 21/88, G01N 1/04

(54) **Kontrollsystem, -einrichtung und -verfahren zum Prüfen von Feststoffprodukten auf visuell detektierbare Fehler**

(30) Priorität: 25.04.1995 DE 19515153
(71) Anmelder: Seidenader Maschinenbau GmbH, 85551 Kirchheim (DE)
(72) Erfinder: Minke, Wolfram, D-82515 Wolfratshausen (DE)
(74) Vertreter: Laufhütte, Dieter, Dr.-Ing.

(57) **Zusammenfassung**

Die Erfindung betrifft ein Kontrollsystem zum Prüfen von Feststoffprodukten auf visuell detektierbare Fehler. Dieses Kontrollsystem enthält Zuführeinrichtungen zum Zuführen der zu kontrollierenden Produkte zu einer die Prüfung durchführenden Kontrolleinrichtung, wobei die Kontrollgeschwindigkeit der Produkte geringer ist als deren Produktionsgeschwindigkeit. Die Zuführeinrichtungen weisen eine Probenentnahmevorrichtung zur Probenentnahme aus der laufenden Produktion auf.

## Beschreibung

Die Erfindung betrifft ein Kontrollsystem nach dem Oberbegriff des Anspruchs 1 sowie eine Kontrolleinrichtung eines derartigen Kontrollsystems zum Prüfen von Feststoffprodukten auf visuell detektierbare Fehler. Des weiteren befaßt sich die Erfindung mit einem entsprechenden Kontrollverfahren nach dem Oberbegriff des Anspruchs 51.

In der modernen Feststoffproduktion, wie beispielsweise der pharmazeutischen oder Lebensmittelfeststoffproduktion, spielen elektronische Überwachungsanlagen eine immer größere Rolle. Der Qualitätsanspruch steigt ständig und gleichzeitig setzen sich rationelle Produktionsmethoden mehr und mehr durch, wie z.B. eine von herkömmlichen Arbeitszeitmodellen gelöste bedienerlose Produktion.

Beispiele hierfür sind u.a. bei der Tablettierung zu finden. Die Parameter Höhe, Härte und Gewicht werden mit nachgeschalteten Zusatzaggregaten "online" geprüft.

Die einzige derzeit überwiegend mit Personal durchgeführte Prüfung ist die visuelle Kontrolle hergestellter Präparate.

Von der Firma Kanebo, Ltd., Osaka, Japan, ist u.a. ein Tabletten-Videoinspektionssystem mit der Modellbezeichnung TVIS-XX bekannt geworden, das zum Prüfen von Feststoffprodukten auf visuell detektierbare Fehler verwendet wird. Dieses Kontrollsystem hat Zuführeinrichtungen zum Zuführen der zu kontrollierenden Produkte zu einer die Prüfung durchführenden Kontrolleinrichtung. Die Zuführeinrichtung ist ein Behälter, in den die gesamte Produktion zur Überprüfung eingefüllt wird, d.h. es wird eine 100%-Kontrolle vorgenommen.

Die Nachteile dieses Systems sowie der entsprechenden Kontrollmaschine sind einerseits ein sehr hoher Anschaffungspreis und andererseits eine geringe Leistung, die sich im Rahmen von ca. 120 tsd. Tabletten pro Stunde bewegt, wohingegen moderne Tablettenmaschinen in der Lage sind, bis zu 1 Mio. Tabletten pro Stunde zu fertigen, d.h., daß die Kontrollgeschwindigkeit der Produkte geringer ist als deren Produktionsgeschwindigkeit, so daß ein "Online"-Betrieb der Prüfung nur möglich ist, wenn die Leistung der Tablettenmaschine reduziert wird.

Die 100%-Kontrolle der fertiggestellten Tabletten mittels des bekannten Systems hat wegen der Zuführung großer Stückzahlen über den Behälter ferner den Nachteil, daß Serienfehler der Tablettenmaschine erst nach Produktion einer großen Stückzahl festgestellt werden können, was hohe Verluste zur Folge haben kann.

Der Erfindung liegt die Aufgabe zu Grunde, ein Kontrollsystem und ein Kontrollverfahren sowie eine Kontrolleinrichtung der gattungsgemäßen Art so weiterzubilden, daß eine Rationalisierung der Produktion erreicht wird, deren Qualität geprüft werden soll.

Diese Aufgabe wird mit einem Kontrollsystem nach Anspruch 1, einem Kontrollverfahren nach Anspruch 51 bzw. einer Kontrolleinrichtung nach Anspruch 28 gelöst.

Nach der Erfindung ist ein gattungsgemäßes Kontrollsystem dadurch gekennzeichnet, daß die Zuführeinrichtungen eine Probenentnahmevorrichtung zur Probenentnahme aus der laufenden Produktion enthalten.

Ein gattungsgemäßes Verfahren wird dadurch weitergebildet, daß aus der laufenden Produktion über eine Probenentnahmevorrichtung der Zuführeinrichtungen Proben entnommen und der Kontrolleinrichtung zur Überprüfung zugeführt werden.

Bei der erfindungsgemäßen Kontrolleinrichtung ist zusätzlich zu den Merkmalen des Kontrollsystems noch vorgesehen, daß sie eine Positioniereinrichtung, eine Prüfeinrichtung und eine Auswerteeinrichtung für die Proben enthält.

Die Erfindung sieht demnach vor, daß eine entsprechend konstruierte und aufgebaute Kontrolle, wie z.B. gemäß einer bevorzugten Ausführungsform eine Videokontrolle, zur Stichprobenkontrolle "online" geschaltet wird. Es ist bislang weder ein Kontrollsystem noch ein -verfahren noch eine -einrichtung bekannt geworden, das bzw. die die visuelle Kontrolle im Stichprobenverfahren durchführt. Durch die Beschränkung der Online-Kontrolle auf Stichproben wird der Kontrollvorgang wesentlich verkürzt, so daß die schnell oder sogar sehr schnell laufenden Herstellungsmaschinen der Feststoffprodukte mit ihrer vollen Leistung eingesetzt werden. Dies führt auf Grund der optimalen Maschinenauslastbarkeit bis zu einer Verzehnfachung der Produktion, ohne daß Kosten für weitere Produktionsmaschinen oder Kontrollsysteme bzw. -einrichtungen anfallen.

Durch die Erfindung können die Produktionskosten im Vergleich zu den 100%-Kontrollen vorteilhafterweise auf etwa 1/10 reduziert werden, wobei zusätzlich kleinere, einfachere und ggf. auch langsamere und somit billigere Kontrolleinrichtungen verwendet werden können. Bei diesen Kontrolleinrichtungen spielt der Zeitfaktor wegen des Stichprobenverfahrens keine so große Rolle mehr und es müssen auch keine so großen Stückzahlen geprüft werden, selbst wenn die zugeordnete Produktionsmaschine auf voller Leistung läuft, wie das folgende Rechenbeispiel zeigt. Es wird angenommen, daß die erfindungsgemäße Lösung in der Lage ist, z.B. 6000 bis 10000 Tabletten pro Stunde, d.h. ca. 100 Tabletten pro Minute, zu prüfen, was nur etwa 1/10 der Leistung einer herkömmlichen Kontrollstation ist. Eine durchschnittliche Tablettenpresse hat 40 Stempelstationen, so daß theoretisch jede Station 2,5 mal pro Minute gesichtet wird. Dies hat außerdem den Vorteil, daß Serienfehler somit nach wenigen Minuten erkennbar sind. Die Leistung der Tablettenpresse würde nicht eingeschränkt werden und die Kontrollmaschine wäre eine Ergänzung zu bestehenden Kontrollsystemen.

Die mögliche kleinere Bauart der erforderlichen Einrichtungen zur Ausführung oder Umsetzung der Erfindung hat ferner den Vorteil, daß eine derartige Kontrolleinrichtung sehr klein gebaut werden kann, so daß sie durch einen geringen Platzbedarf leicht und vorteilhaft an den erforderlichen Stellen aufgebaut und eingesetzt werden kann.

Die Stichprobenkontrolle führt außerdem dazu, daß Fehler z.B. einer Tablettenpresse sofort, d.h. in einem Kontrolldurchgang erkannt und die Produktion in Abhängigkeit davon sofort gestoppt werden können, was zu einem niedrigen Ausschuß und somit einer kostengünstigeren Produktion führt. Allgemein können Fehler und Defekte frühzeitig erkannt und somit abgestellt werden. Die bekannte 100%-Kontrolle ist nicht in der Lage Ausschuß zu verhindern, sondern sortiert ihn nur aus. Demgegenüber ist es aber besser, Fehler zu erkennen und abzustellen, als zu produzieren und auszusortieren.

Weiterhin ist vorteilhaft, daß jede bestehende Produktionslinie, wie z.B. eine Tablettenpresse, nachgerüstet werden kann.

Obwohl in dieser Beschreibung zur Erklärung von Merkmalen der Erfindung sowie zur Darstellung von Ausführungsbeispielen auf die Tablettenherstellung Bezug genommen wird, ist die Erfindung jedoch nicht auf diese Anwendung beschränkt. Sie kann ebenfalls mit der gleichen Wirkung und den gleichen Vorteilen z.B. bei der Überprüfung von Kapseln und Hohlkörpern sowie anderen pharmazeutischen Feststoffpräparaten eingesetzt werden. Aber auch außerhalb der Herstellungsprozesse derartiger Pharmaprodukte eignet sich die Erfindung bei der Herstellung sämtlicher fester Lebensmittel und ggf. deren Verpackungen zur Sichtprüfung. Letztlich kommt es auf das Produkt bei der Erfindung nicht an, so daß problemlos überall dort, wo die Produktionsstückzahlen die Kapazität von visuell prüfenden Kontrolleinrichtungen übersteigen, die Erfindung mit all ihren Wirkungen und Vorteilen eingesetzt werden kann.

Vorzugsweise ist nach Anspruch 2 eine Steuereinrichtung vorgesehen, mittels der die Produktion in Abhängigkeit vom Probenkontrollergebnis steuerbar ist. Diese Steuereinrichtung kann zum Anhalten der Produktion und/oder zum Beeinflussen von Produktionsparametern in Abhängigkeit vom Probenkontrollergebnis ausgelegt sein (Ansprüche 3 bzw. 4). Damit ist in besonders vorteilhafter Weise eine bedienerlose und äußerst rationelle Produktion realisierbar, wobei nach den Ansprüchen 5 und 6 insbesondere Anzeigeneinrichtungen und/oder Protokolleinrichtungen vorgesehen sein können, mittels denen das Auftreten und/oder die Art der Produktionssteuerung durch die Steuereinrichtung anzeigbar bzw. protokollierbar ist/sind.

Gemäß einer bevorzugten Weiterbildung nach Anspruch 7 ist eine Puffereinrichtung vorgesehen, mittels der die Produktion zumindest während der Durchführung der Kontrolle einer Probe pufferbar ist, wobei mit einer vorzugsweisen Freigabesteuerung nach Anspruch 8 die Freigabe der in der Puffereinrichtung gepufferten Produktion in Abhängigkeit vom Probenkontrollergebnis steuerbar ist. Auch für das Auftreten und/oder Parameter der Freigabe durch die Freigabesteuerung können Anzeigeeinrichtungen bzw. Protokolleinrichtungen vorgesehen werden, wie in den Ansprüchen 9 und 10 angegeben ist. Ferner ist die Puffereinrichtung nach Anspruch 11 vorzugsweise ein gesteuert entleerbarer Zwischenbehälter, so daß der Automatisierungs- und somit Rationalisierungsgrad bei gleichzeitig hohem Niveau der Qualitätssicherung weiter verbessert werden kann. Die Pufferung bringt allgemein den Vorteil, daß die Prüfergebnisse der entnommenen Proben eindeutig einer bestimmten Produktionscharge zuordenbar sind, wodurch zusätzlich unnötiger Ausschuß vermieden werden kann.

Die Ansprüche 13 bis 16 betreffen eine vorteilhafte Steuerung für die Probenentnahmevorrichtung insbesondere in Form einer Stückzahl- oder Zeitsteuereinrichtung, wobei letztere so ausgelegt sein kann, daß sie die Dauer und/oder den Abstand von Probenentnahmen zeitlich steuert und vorzugsweise die Puffereinrichtung so steuert, daß letztere die einer Probenentnahme zugeordnete Produktion identifizierbar puffert. Damit läßt sich die Probenentnahme sehr leicht, sicher und genau realisieren und auswerten.

Bevorzugte Ausführungsformen der Probenentnahmevorrichtung sind in den Ansprüchen 17 bis 22 angegeben. Entsprechend ist die Probenentnahmevorrichtung eine in den Produktionsstrom einsetzbare, insbesondere mechanische Weiche, die eine Leitanordnung enthalten kann, die zum Ableiten von Proben aus dem Produktionsstrom einstellbar ist. Die Weiche kann alternativ oder zusätzlich eine Luftstromanordnung enthalten, die zum Ableiten von Proben aus dem Produktionsstrom einstellbar ist. Bei jeglicher Bauart kann die Weiche, die aus Edelstahl, V4A- oder V2A-Stahl und/oder lebensmittelechtem Kunststoff bestehen kann, zum horizontalen oder vertikalen Ableiten von Proben ausgelegt sein. Die entsprechenden Ausgestaltungen ermöglichen eine sicheren und für die zu prüfenden Produkte unproblematische Weise, die Produkte der Kontrolleinrichtung in genauer Stückzahl und sicher zuzuführen.

Vorzugsweise sind die Zuführeinrichtungen, die Steuereinrichtung, die Freigabesteuerung und/oder die Zeitsteuereinrichtung gemäß den Ansprüchen 23 bis 26 zumindest teilweise der Kontrolleinrichtung zugeordnet. Dies fördert einen kompakten Aufbau. Im Sinne einer zentralen Prozeßsteuerung kann ferner die Probenentnahmevorrichtung zumindest teilweise durch die die zu kontrollierenden Produkte herstellende Maschine und/oder eine externe Steuerung steuerbar sein. Die letztere Weiterbildung nach Anspruch 27 schafft die vorteilhafte Möglichkeit, den gesamten Fertigungsprozeß einschließlich der Qualitätskontrolle und -steuerung zentral vorzunehmen.

Die bei dem oder als das erfindungsgemäße Kontrollsystem verwendete Kontrolleinrichtung weist ferner eine Positioniereinrichtung, eine Prüfeinrichtung und eine Auswerteeinrichtung für die Proben auf, wie im Anspruch 28 angegeben ist.

Vorzugsweise enthält diese Kontrolleinrichtung nach Anspruch 29 Fördereinrichtungen, die den Zuführeinrichtungen zugeordnet und ausgelegt sind, der Positioniereinrichtung zu prüfende Produkte von der Probenentnahmevorrichtung zuzuführen. Als Fördereinrichtungen können ein Walzenförderer, ein Förderband, eine pneumatische Fördervorrichtung, eine Vakuumfördervorrichtung, ein Vibrationsblech, eine Direktzuführung und/oder ein Bürstenkasten vorgesehen sein (Anspruch 30).

Die vorzugsweise Gestaltung der Prüfeinrichtung nach Anspruch 31 sieht vor, daß sie zum Aufnehmen des Aussehens der zu prüfenden Feststoffprodukte eine Erfassungseinrichtung, z.B. gemäß den Ansprüchen 32 bis 34 in Form zumindest eines Zeilensensors oder einer Videokamera und vorzugsweise entsprechend zwei Stück davon, enthält. Dabei handelt es sich um grundsätzlich bei der optischen Prüfung bewährte Systeme, die jedoch einfacher und daher günstiger als beim Stand der Technik ausgeführt werden können.

Die Ansprüche 35 bis 37 betreffen bevorzugten Ausgestaltungen, um Probenkörper zum Prüfen mit dem zumindest einen Zeilensensor bzw. der zumindest einen Videokamera zuzuführen. Dabei kann vorgesehen sein, daß sich beim Prüfvorgang die Positioniereinrichtung und/oder der zumindest eine Zeilensensor bzw. die zumindest eine Videokamera in der Kontrolleinrichtung zum Positionieren relativ zu zu prüfenden Feststoffprodukten bewegen kann/können. Um einen definierte Lage der Probenkörper zu erhalten, ist es bevorzugt, daß die Positioniereinrichtung eine Probenaufnahmevorrichtung enthält, wofür die Probenaufnahmevorrichtung eine Platte mit Vertiefungen, wie Näpfen, oder Kammern, eine Kassettenkonstruktion, eine Sternradanordnung, eine Förderbandanordnung und/oder mechanische Arme enthalten kann (Ansprüche 38 bzw. 39). Entsprechend wird jeweils der reibungslose und fehlerfreie Ablauf der Kontrolle verbessert und andererseits können ggf. Bewegungszeiten kurz gehalten werden, so daß mit der erfindungsgemäßen Einrichtung auch sehr schnell gearbeitet werden kann.

Besonders einfache und unaufwendige Gestaltungen, um Produkte z.B. beidseitig prüfen zu können, beschreiben die Ansprüche 40 bis 42. Diesen entsprechend enthält die Positioniereinrichtung eine Wendeeinrichtung für Feststoffprodukte oder die Probenaufnahmevorrichtung, insbesondere mit einer Niederhaltevorrichtung zum Fixieren von Feststoffprodukten beim Wenden an der Probenaufnahmevorrichtung, um Feststoffprodukte einzeln oder in Gruppen ganz oder teilweise zu wenden. Dazu kann sowohl die Wendeeinrichtung als auch die Niederhaltevorrichtung mechanische Arme, Druckeinrichtungen, wie Vakuummittel, etc. zum Ausführen des Wendens bzw. des Niederhaltens enthalten. Diese Ausgestaltungen ermöglichen eine Reduzierung der bisherigen Abtasteinheiten, die mit sehr teueren Geräten, z.B. doppelt vorhandenen Videokameras zur beidseitigen Inspektion, bestückt sind, die zumindest teilweise eingespart werden können.

Die eigentliche Prüfung ist ein Vergleich zum Feststellen der Abweichungen des von der Erfassungseinrichtung aufgenommenen Aussehens der geprüften Feststoffprodukte von einer Referenz, wofür nach Anspruch 43 die Prüfeinrichtung eine Vergleichseinrichtung enthält und nach Anspruch 44 ein Speicher vorgesehen sein kann, in dem fehlerfreie und/oder mit Toleranzen versehene Muster als Referenz abspeicherbar sind. Eine derartige Vergleichseinrichtung stellt in vorteilhafter Weise eine schnelle Durchführung der anfallenden Berechnungen sicher.

Bevorzugte und vorteilhafte Schaltungen, die den Kontrollbetrieb besonders einfach gestalten, für die einzelnen Entscheidungs- und Regelvorgänge sowie nähere Spezifikationen der einzelnen Baugruppen sind in den Ansprüchen 45 bis 49 angegeben. Entsprechend kann die Auswerteeinrichtung mit der Vergleichseinrichtung, der Steuereinrichtung und/oder der Freigabesteuerung gekoppelt sein. Die Qualität der Produktion kann über die Auswerteeinrichtung festgestellt werden. Diese modulähnliche Bauart ist sehr rationell.

Weiterhin ist nach Anspruch 50 bevorzugt, daß produktberührende Teile aus Edelstahl, V4A- oder V2A-Stahl und/oder lebensmittelechtem Kunststoff bestehen, da diese Materialien den Umgang mit Pharmazeutika und Lebensmitteln ohne weitere Risiken ermöglichen.

Die Ansprüche 51 bis 62 betreffen ein erfindungsgemäßes Kontrollverfahren samt vorzugsweisen Weiterbildungen. Grundsätzlich ist verfahrensmäßig vorgesehen, daß aus der laufenden Produktion über eine Probenentnahmevorrichtung der Zuführeinrichtungen Proben entnommen und der Kontrolleinrichtung zur Überprüfung zugeführt werden. Besonders vorteilhaft ist es, wenn die Produktion in Abhängigkeit vom Probenkontrollergebnis gesteuert wird, da dies eine vollautomatische Fertigung und Qualitätsregelung ermöglicht, wobei die Produktion in Abhängigkeit vom Probenkontrollergebnis angehalten oder ihre Parameter beeinflußt werden kann/können.

Bevorzugt ist dabei ferner, daß die Produktion zumindest während des Prüfvorgangs in einer Puffereinrichtung gepuffert und insbesondere in Abhängigkeit vom Probenkontrollergebnis freigegeben wird. Zusätzlich oder auch für sich kann die Probenentnahme in Abhängigkeit vom Probenkontrollergebnis, stückzahlmäßig und/oder zeitlich gesteuert werden. Bevorzugte Positionierungs- und Einstellverfahren zur Durchführung der Prüfung sind analog den im Zusammenhang mit der Kontrolleinrichtung angegebenen baulichen Vorgaben gelöst.

Weitere bevorzugte Ausgestaltungen der Erfindung ergeben sich im übrigen aus den Unteransprüchen.

Die Erfindung wird nachfolgend unter Bezugnahme auf die Zeichnung näher beschrieben in der:
- Figur 1: ein schematischer Aufbau einer Ausführungsform des Kontrollsystems ist und
- Figur 2: ein schematischer Aufbau der Kontrolleinrichtung der in der Figur 1 gezeigten Ausführungsform ist.

Insoweit in dieser Beschreibung auf die Tablettenherstellung Bezug genommen wird, geschieht dies nur beispielhaft ohne damit den Umfang der Erfindung zu beschränken, die auch auf andere pharmazeutische Feststoffproduktionen, Feststofflebensmittelproduktionen und allgemein Feststoffproduktionen anwendbar ist, die mit hoher oder sogar sehr hoher Geschwindigkeit laufen.

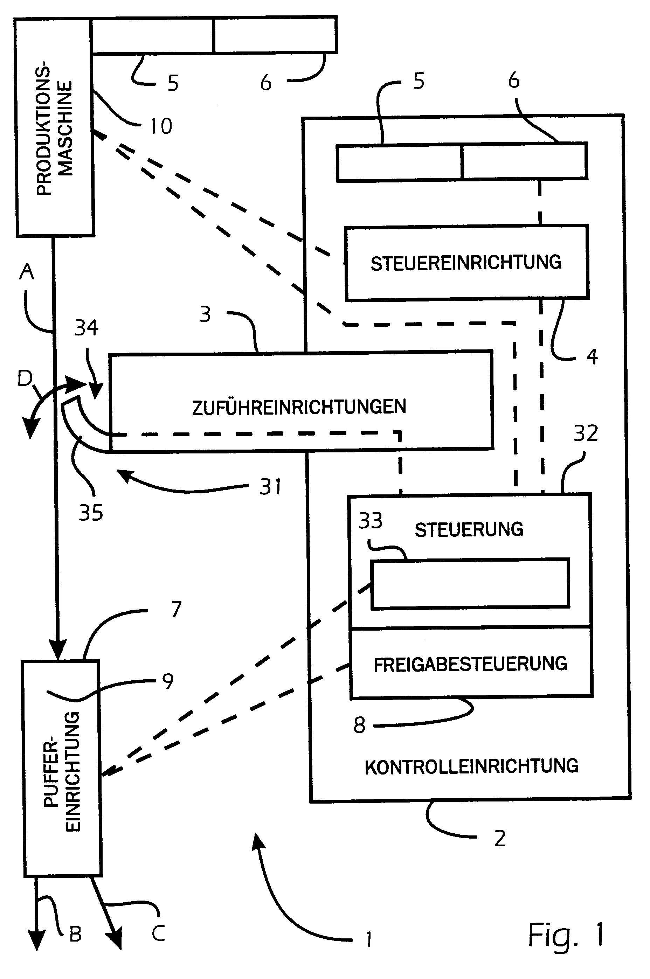

In der Figur 1 ist schematisch eine Ausführungsform des Kontrollsystems 1 gezeigt. Das Kontrollsystem 1 dient zum Prüfen von Feststoffprodukten auf visuell detektierbare Fehler und weist Zuführeinrichtungen 3 zum Zuführen der zu kontrollierenden Produkte zu einer die Prüfung durchführenden Kontrolleinrichtung 2 auf. Wesentlich ist, daß die Kontrollgeschwindigkeit der Produkte, d.h. die kontrollierte Anzahl pro Zeiteinheit, geringer ist als deren Produktionsgeschwindigkeit. Die Zuführeinrichtungen 3 enthalten eine Probenentnahmevorrichtung 31 zur Probenentnahme aus der laufenden Produktion von der Produktionsmaschine 10, die im gezeigten Beispiel eine Tablettenpresse ist.

Des weiteren ist eine Steuereinrichtung 4 vorgesehen, mittels der die Produktion in Abhängigkeit vom Probenkontrollergebnis gesteuert werden kann. Die Steuereinrichtung 4 kann die Produktion in Abhängigkeit vom Probenkontrollergebnis anhalten oder auch ihre Parameter beeinflussen. Ein Ändern der Produktionsparameter wird beispielsweise dann erfolgen, wenn Tabletten mit Öldurchbrüchen festgestellt werden. Die Steuereinrichtung 4 kann diesen Fehler dadurch daß sie ein Verringern des Öldrucks in der Tablettenpresse veranlaßt, selbst beheben. Ist jedoch ein manuelles Einschreiten zur Fehlerbehebung unumgänglich, z.B. bei auf Grund eines defekten oder verschmutzten Stempels der Tablettenpresse deformierten Tabletten, so wird die Steuereinrichtung 4 die Tablettenpresse anhalten.

Um über den jeweiligen Produktionsablauf informiert zu sein, sind Anzeigeneinrichtungen 5 und Protokolleinrichtungen 6 vorgesehen, mittels denen das Auftreten und/oder die Art der Produktionssteuerung durch die Steuereinrichtung angezeigt bzw. protokolliert werden kann/können.

Von Beginn einer Probenentnahme bis zum Beginn der nächsten Probenentnahme, die bei der vorliegenden Ausführungsform zumindest in einem Grundbetriebsmodus in gleichbleibenden Abständen stattfinden, wird die Produktion in einer Puffereinrichtung 7 gepuffert. Wenn das Kontrollergebnis günstig, d.h. positiv ausfällt, gibt eine Freigabesteuerung 8 die in der Puffereinrichtung 7 gepufferte Produktion zur Weiterverarbeitung oder -behandlung frei, wie in der Figur 1 durch B angegeben ist. Andernfalls, also bei negativem Prüfergebnis der Gesamtprobe wird die gepufferte Produktion, falls dies rentabel oder erforderlich ist, einem Aussortierprozeß unterzogen, oder je nach Produkt entsorgt, rückgeführt, umgearbeitet usw. wie in der Figur 1 durch C angedeutet ist. Auch betreffend der Funktion der Freigabesteuerung 8 sind Anzeigeneinrichtungen 5 und Protokolleinrichtungen 6 vorgesehen, um das Auftreten und/oder Parameter der Freigabe oder Nichtfreigabe durch die Freigabesteuerung 8 anzuzeigen bzw. zu protokollieren. Die Anzeigeneinrichtungen 5 bzw. die Protokolleinrichtungen 6 können an der Kontrolleinrichtung 2 und/oder der die zu kontrollierenden Produkte herstellende Maschine 10 angeordnet sein.

Als Puffereinrichtung 7 wird ein gesteuert entleerbarer Zwischenbehälter 9 eingesetzt, dessen Entleerung je nach Kontrollergebnis in die Weiterverarbeitung B oder Entsorgung, Nachbearbeitung, Rückführung etc. C geht.

In der Figur 1 ist ferner eine Steuerung 32 für die Probenentnahmevorrichtung 31 vorgesehen, die im vorliegenden Fall eine Zeitsteuereinrichtung 33 ist, aber auch beispielsweise eine Stückzahlsteuereinrichtung sein könnte. Die Zeitsteuereinrichtung 33 kann die Dauer und den Abstand von Probenentnahmen zeitlich steuern. Gleichzeitig steuert die Zeitsteuereinrichtung 33 die Puffereinrichtung 7 so, daß letztere die einer Probenentnahme zugeordnete Produktion identifizierbar puffert, d.h. z.B., daß zu einem Probendurchgang x1 eine gepufferte Produktion X1 festgehalten wird und es weitere Paare xi und Xi gibt.

Die Probenentnahmevorrichtung 31 ist beim gezeigten Ausführungsbeispiel eine in den Produktionsstrom einsetzbare, mechanische Weiche 34, die eine Leitanordnung 35 enthält, die zum Ableiten von Proben aus dem Produktionsstrom einstellbar ist, wie durch den Doppelpfeil D in der Figur 1 angezeigt ist. Die Weiche 34 könnte alternativ oder zusätzlich eine Luftstromanordnung enthalten, die zum Ableiten von Proben aus dem Produktionsstrom einstellbar ist. Weiterhin leitet die Weiche 34 Proben im gezeigten Beispiel horizontal aus dem Produktionsstrom A heraus; dies könnte jedoch auch durch vertikales Ableiten erfolgen. Bevorzugte Materialien für die Weiche 34 insbesondere in der pharmazeutischen und in der Lebensmittelproduktion sind Edelstahl, V4A- oder V2A-Stahl und/oder lebensmittelechtem Kunststoff.

Um eine möglichst kompakte Anordnung zu erhalten, sind die Kontrolleinrichtung 2, die Zuführeinrichtungen 3, die Steuereinrichtung 4, die Freigabesteuerung 8 und die Zeitsteuereinrichtung 33 baulich zusammengefaßt. Daten- und Steuerverbindungen sind in der Zeichnung durch gestrichelte Linien dargestellt. Aneinander angrenzend dargestellte Einheiten stehen ebenfalls zum Daten- und Befehlsaustauch miteinander in Verbindung. So kann beispielsweise die Freigabesteuerung 8 über die dargestellten und beschriebenen Verbindungen, d.h. auch über die Steuerung 32 und die Steuereinrichtung 4, entsprechende Informationen an die Anzeigen- und Protokolleinrichtungen 5 und 6 der Kontrolleinheit 2 leiten.

Hinsichtlich der Steuerung der Probenentnahmevorrichtung 31 kann auch vorgesehen werden, daß diese zumindest teilweise durch die die zu kontrollierenden Produkte herstellende Maschine 10 und/oder eine externe Steuerung (nicht dargestellt) steuerbar ist. Dies ist insoweit sinnvoll, als z.B. die Produktionsgeschwindigkeit der Produktionsmaschine die Probenentnahmefrequenz beeinflussen kann. Auch eine externe Steuerung, wie beispielsweise die Steuerung einer Einrichtung zum Prüfen von Höhe, Härte und Gewicht, kann das Prüferfordernis der optischen Kontrolle beeinflussen, und zwar z.B. dann, wenn abnormale Gewichtswerte festgestellt werden, da dies auf Präparate mit einer falschen stofflichen Zusammensetzung oder auf nicht komplette Präparate zurückzuführen sein kann. Die Entscheidung, welcher Fehler vorliegt, kann erst im Zusammenspiel mit der optischen Kontrolle getroffen werden. Entsprechend kann in solchen Fällen die externe Steuerung beispielsweise eine außerplanmäßige optische Kontrolle auslösen.

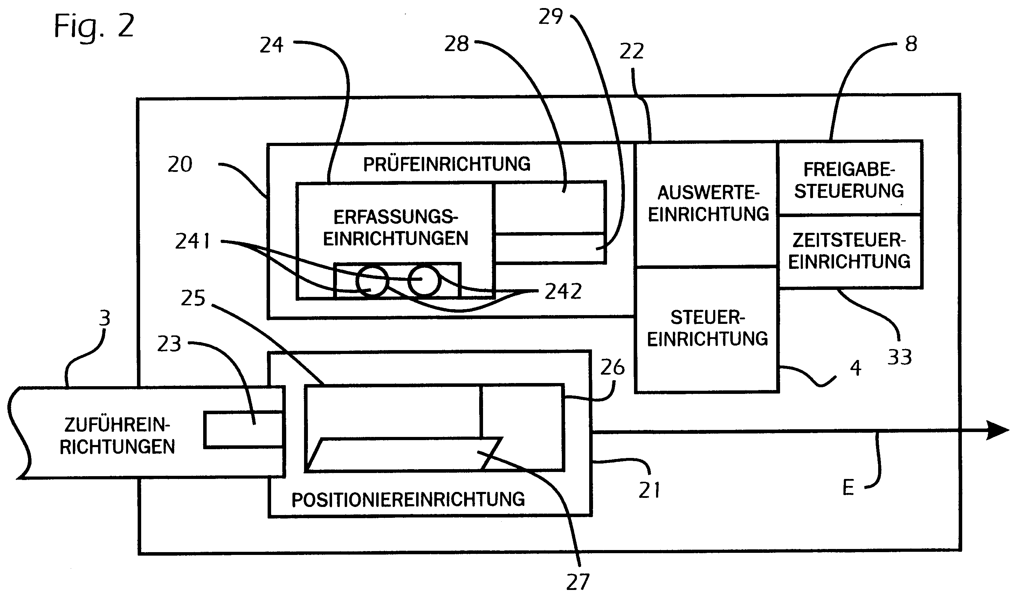

In der Figur 2 ist die Kontrolleinrichtung 2 des Kontrollsystems 1 gezeigt. Die Kontrolleinrichtung 2 enthält eine Positioniereinrichtung 21, eine Prüfeinrichtung 20, eine Auswerteeinrichtung 22 und Fördereinrichtungen 23 für die Proben.

Die Fördereinrichtungen 23, die mit den Zuführeinrichtungen 3 zusammenhängen, führen der Positioniereinrichtung 21 zu prüfende Produkte von der Probenentnahmevorrichtung 31 zu. Die Fördereinrichtungen 23 können durch einen Walzenförderer, ein Förderband, eine pneumatische Fördervorrichtung, eine Vakuumfördervorrichtung, ein Vibrationsblech, eine Direktzuführung oder einen Bürstenkasten oder je nach Anwendung und Produkten beliebige Kombinationen daraus realisiert sein.

Die Prüfeinrichtung 20 hat eine Erfassungseinrichtung 24 zum Aufnehmen des Aussehens der zu prüfenden Feststoffprodukte. Die Erfassungseinrichtung 24 enthält zumindest einen Zeilensensor 241. Zur Feststellung beispielsweise von Farbfehlern bei zweifarbigen Produkten sind jedoch zwei am besten örtlich getrennte Zeilensensoren 241 erforderlich, obwohl auch z.B. optische Wechselfilter oder andere Einrichtungen zu entsprechenden Informationen führen können. Die Zeilensensoren 241 sind beim gezeigten Ausführungsbeispiel Bestandteile von Videokameras 242, die üblicherweise zur Bildmusteraufzeichnung verwendet werden und daher hier nicht weiter beschrieben werden, wie auch andere optische und elektronische Einrichtungen zur Durchführung und Erleichterung der Bilderfassung.

Die beiden Videokameras 242 sind in der Kontrolleinrichtung 2 zum Positionieren relativ zu zu prüfenden Feststoffprodukten beim Prüfvorgang beweglich angeordnet, d.h., sie sind zu den Positionen der Prüflinge bewegbar. Alternativ könnten die Videokameras 242 auch ortsfest in der Kontrolleinrichtung 2 angeordnet sein, dann müßten jedoch in jedem Fall die Prüflinge geeignet in die Erfassungspositionen einstellbar sein. Es kann jedoch auch vorgesehen werden, daß sowohl die Videokameras 242 als auch die Prüflinge beweglich sind, so daß sich die Einstellzeiten der Prüfpositionen verkürzen.

Die Positioniereinrichtung 21 weist eine Probenaufnahmevorrichtung 25 auf, die eine Platte mit Vertiefungen, wie Näpfen, oder Kammern, eine Kassettenkonstruktion, eine Sternradanordnung, eine Förderbandanordnung oder eine mechanische Greifanordnung sowie eine beliebige Kombination daraus sein kann. Die Positionierung der Prüflinge in ihrer jeweiligen Prüfposition erfolgt durch Positionieren der Probenaufnahmevorrichtung 25 oder, wie im gezeigten Fall durch Positionieren der Videokameras 242. Um auch die Rückseiten der Tabletten ohne größeren Aufwand kontrollieren zu können, enthält die Positioniereinrichtung 25 eine Wendeeinrichtung 26 für die Probenaufnahmevorrichtung 25. Für größere Produkte könnte die Wendeeinrichtung 26 auch ausgelegt sein, einzelne Produkte zu wenden. Statt der Wendeeinrichtung 26 zum Wenden der Prüflinge können auch evtl. die Videokameras 242 entsprechend verfahrbar sein, was davon abhängen wird, welche Bewegungen einfacher durchgeführt werden können.

Damit die Tabletten beim Wenden der Probenaufnahmevorrichtung 25 mit der Wendeeinrichtung 26 nicht aus der Probenaufnahmevorrichtung 25 herausfallen, ist eine Niederhaltevorrichtung 27 vorgesehen, die die Feststoffproduktprüflinge beim Wenden an der Probenaufnahmevorrichtung 25 fixiert.

Baulich können sowohl die Wendeeinrichtung 26 als auch die Niederhaltevorrichtung 27 mechanische Arme und/oder Druckeinrichtungen, wie Vakuummittel, zum Ausführen der Wendeoperation bzw. des Niederhaltens. Es sind jedoch auch alle anderen geeigneten Realisierungen möglich.

Die Prüfeinrichtung 20 enthält eine Vergleichseinrichtung 28, mittels der Abweichungen des von der Erfassungseinrichtung 24 aufgenommenen Aussehens der geprüften Feststoffprodukte von einer Referenz feststellbar sind. Das/Die Referenzmuster ist ein/sind fehlerfreie und/oder mit Toleranzen versehene(s) Bildmuster der Tablettenoberflächen und in einem Speicher 29 gespeichert. Die Auswerteeinrichtung 22 ist mit der Vergleichseinrichtung 28 gekoppelt und stellt anhand deren Ergebnisse die Qualität der Produktion fest. Die Auswerteeinrichtung 22 ist ferner mit der Steuereinrichtung 4 gekoppelt, so daß letztere die Produktion in Abhängigkeit vom Probenkontrollergebnis steuern kann. Außerdem ist die Auswerteeinrichtung 22 mit der Freigabesteuerung 8 gekoppelt, damit letztere die gepufferte Produktion in Abhängigkeit vom Probenkontrollergebnis freigibt oder nicht. Schließlich ist die Auswerteeinrichtung 22 noch mit der Zeitsteuereinrichtung 33 der Probenentnahmevorrichtung 31 gekoppelt, um eine nachfolgende Probenentnahme auszulösen.

Es ist noch zu beachten, daß produktberührende Teile aus Edelstahl, V4A- oder V2A-Stahl und/oder lebensmittelechtem Kunststoff bestehen. Ferner können auch bereits bestehende Produktionsmaschinen problemlos mit dem Kontrollsystem 1 bzw. der Kontrolleinrichtung 2 ausgerüstet werden. Dazu wird einfach in eine konventionelle Rundläufer-Tablettenpresse eine zusätzliche Musterzugweiche 34 zur visuellen Kontrolleinrichtung 2 eingebaut oder die Kontrolleinrichtung 2 an eine bereits bestehende Probenentnahmevorrichtung 31 angeschlossen.

Allgemein kann durch Kopplung der Auswerteeinrichtung 22 mit der Vergleichseinrichtung 28 anhand deren Ergebnisse die Qualität der Produktion festgestellt werden. Ist die Auswerteeinrichtung 22 mit der Steuereinrichtung 4 gekoppelt, so kann letztere die Produktion in Abhängigkeit vom Probenkontrollergebnis steuern, so daß etliche Serienfehler durch die Steuerung automatisch behoben werden können. Durch Kopplung der Auswerteeinrichtung 22 mit der Freigabesteuerung 8 kann letztere veranlaßt werden, die gepufferte Produktion in Abhängigkeit vom Probenkontrollergebnis freizugeben, so daß auch die Weiterverarbeitung B, wie z.B. Konfektionierung und Verpackung automatisch beschickt werden kann.

Ist die Auswerteeinrichtung 22 mit der Steuerung 32 bzw. ggf. der Zeitsteuereinrichtung 33 der Probenentnahmevorrichtung 31 gekoppelt, um eine folgende Probenentnahme in Abhängigkeit vom gegenwärtigen Probenkontrollergebnis auszulösen, kann eine bedarfsorientierte Kontrolle vorgenommen werden. Z.B. können Kontrollen in kürzeren Abständen durchgeführt werden, wenn häufig Fehler auftreten. Andernfalls kann die Kontrollfrequenz herabgesetzt werden, was den Produktionsaufwand verringert.

Nach der durchgeführten Kontrolle werden die Prüflinge aus der Kontrolleinrichtung 2 ausgegeben, wie der Pfeil E symbolisiert, wofür allgemein bekannte, geeignete Einrichtungen verwendet werden. Die Prüflinge können dann mit evtl. erstellten Protokollen abgelegt oder in die Weiterverarbeitung B oder die Aussortierung etc. C (Figur 1) eingeleitet werden.

Der Verfahrensablauf für die vorstehend beschriebene Ausführungsform ist im wesentlichen nachfolgend beschrieben, wobei sich weitere Einzelheiten des Verfahrens auch aus der Beschreibung des Kontrollsystems 1 und der Kontrolleinrichtung 2 und den entsprechenden Darstellungen in und Beschreibungen zu den Figuren 1 und 2 ergeben.

Es sollen Feststoffprodukte auf visuell detektierbare Fehler geprüft werden, wobei die Kontrollgeschwindigkeit der Produkte geringer ist als deren Produktionsgeschwindigkeit, die durch eine sehr schnell laufende Produktionsmaschine 10 vorgegeben ist.

Eine beliebige Tablettenpresse als Produktionsmaschine 10 produziert eine vorgewählte Stückzahl an Tabletten pro Stunde, z.B. 180 tsd. Ein angeschlossenes Prüfsystem prüft eine vorgegebene Anzahl an Tabletten auf Höhe, Härte und Gewicht, indem es z.B. alle 30 tsd. Stück einen Probenzug vornimmt. Die ermittelten Werte fließen in die Steuerung der Presse 10 ein, und ein Regelzyklus wird auf Basis dieser Erkenntnisse gestartet.

Zur Durchführung der Kontrolle werden die zu kontrollierenden Produkte mittels Zuführeinrichtungen 3 einer die Prüfung durchführenden Kontrolleinrichtung 2 zugeführt, und zwar werden aus der laufenden Produktion über eine Probenentnahmevorrichtung 31 der Zuführeinrichtungen 3 Proben entnommen und der Kontrolleinrichtung 2 zur Überprüfung zugeführt. Mittels der Steuereinrichtung 4 wird die Produktion in Abhängigkeit vom Probenkontrollergebnis gesteuert indem in Abhängigkeit vom Probenkontrollergebnis die Produktion angehalten oder ihre Parameter beeinflußt werden. D.h., daß auch auf Basis der visuellen Prüfung gewonnene Ergebnisse in den oder einen Regelzyklus eingegeben werden, um die Produktion zu optimieren.

Genauer wird über die Weiche 34 mit deren Leitanordnung 35 der laufenden Produktion, d.h. dem Tablettenlauf, eine über den Zeitfaktor der Öffnung der Weiche 34 vorgegebene Anzahl von Tabletten, z.B. 100 Stück, entnommen und der visuellen Kontrolleinrichtung 2 zugeführt.

Entnommene Proben werden über die Fördereinrichtungen 23 einer Prüfeinrichtung 20 zur Prüfung zugeführt und relativ zur Prüfeinrichtung 20 positioniert. Dies geschieht dadurch, daß die durch die Weiche 34 aus der Produktion ausgegliederten Tabletten über eine Fördereinrichtung 23 der Bilderfassungseinrichtung 24 zugeführt und durch eine Positioniereinrichtung 21 in der Bilderfassungseinrichtung 24 in vorgegebene Positionen gebracht werden.

Die Videokameras 242 der Bilderfassungseinrichtung 24 liefern nun die für den Vergleich mit dem Referenzmuster erforderlichen Bilddaten der Tablettenoberfläche an eine Vergleichseinrichtung 28, die ihrerseits die durch die Positioniereinrichtung 21 positionierten Tabletten mit dem vorher eingegebenen Referenzmuster vergleicht. Je nach Kontrollerfordernis kann mit einer oder mehreren Videokameras 242 oder allgemein Zeilensensoren 241 gearbeitet werden. Letztere werden beim Prüfvorgang selbst relativ zu den zu prüfenden Prüflingen positioniert. Die visuellen Kontrolle wird also so durchgeführt, daß eine Videokamera oder -kameras 242 digitalisierte Bilder der Prüflingoberflächen an einen Rechner übermittelt/n, der die Vergleichseinrichtung 28 bildet und den Vergleich mit einem Referenzmuster vornimmt, um Fehler festzustellen.

Nach der Prüfung der ersten Seite hält eine Niederhaltevorrichtung 27 die Tabletten in ihrer Position fest, und die Positioniereinrichtung 21 wird mittels einer Wendeeinrichtung 26 mit den Tabletten umgedreht. Dadurch entfällt das Erfordernis, beiderseits der Tabletten Videokameras 242 einzusetzen, was eine entsprechende Kostenersparnis mit sich bringt. Nach dem Umdrehen fährt die Niederhaltevorrichtung 27 wieder zurück, und die Videokamera(s) 242 oder allgemein Prüfeinrichtung 20 prüft/prüfen die Rückseiten der Tabletten. Die zu prüfenden Tabletten werden somit von beiden Seiten gesichtet.

Alternativ könnten beim Prüfvorgang auch die Feststoffproduktprüflinge selbst z.B. durch die Fördereinrichtung 23 und/oder die Wendeeinrichtung 26 relativ zur Prüfeinrichtung 20 positioniert werden. Bei einer oder mehreren feststehenden Videokamera(s) 242 werden somit die Tabletten sowohl unter jeder Videokamera durchgeführt als auch mit mechanischen Hilfsmitteln gedreht. Es ist aber durch die Erfindung nicht ausgeschlossen, mehr als zwei Zeilensensoren 241 oder Videokameras 242 auch um eine Prüflingsposition herum verteilt anzuordnen, um mehrere Seiten des Prüflings kontrollieren zu können.

Die Niederhaltevorrichtung 27 kann quasi ein Gegenstück zur Probenaufnahmevorrichtung 25 sein (z.B. gleiche Platte mit Vertiefungen). Beispielsweise kommt die Niederhaltevorrichtung 27 von oben oder von der Seite auf das Prüfgut, fixiert es bei der 180°-Drehung auf seinem Platz und gibt es anschließend für die Videokamera(s) 242 frei. Die Niederhaltevorrichtung 27 kann insbesondere bei starrer bzw. starren Videokamera(s) 242 auch durch mechanische Arme, die die Tablette von zwei Seiten seitlich oder von oben und unten fassen und wenden, oder durch Vakuummittel usw. gebildet sein.

Nach Abschluß der Prüfung erfolgt die Auswertung in der SPS/PC-Überprüfungs- und -Auswerteeinrichtung 22, die durch einen Systemprogrammsteuerungs-PC oder -rechner gebildet ist, der ganz oder teilweise sämtliche Steuerungen und Steuereinrichtungen bilden kann. Während dieser Zeit, z.B. vom Start eines Prüfvorgangs bis zum Start des nächsten Prüfvorgangs, zumindest jedoch während eines Prüfvorgangs wird die Produktion in einer Puffereinrichtung 7 gepuffert, die die gepufferte Produktion in Abhängigkeit vom Probenkontrollergebnis freigibt. D.h., bei positivem Kontrollergebnis erfolgt die Freigabe der geprüften sowie der bis dahin in einem Zwischenbehälter 9 gepufferten Produktion. Bei negativem Ergebnis wird in die Steuerung der Tablettenpresse eingegriffen (z.B. Stopp oder Reduzierung des Schmierimpulses). Sämtliche Werte stehen zur Auswertung eines vorgewählten Zeitraums zur Verfügung (Fehlersuche).

Die Freigabe in die Gutproduktion erfolgt somit erst nach Auswertung der Probe. Sollte die Probe nicht ein vorgegebenes erforderliches Ergebnis liefern, wird die Tablettenpresse 10 z.B. über einen Potentialkontakt gestoppt. Es erscheint eine Meldung an einer Anzeigeneinrichtung 5. Protokolleinrichtungen 6 protokollieren den Kontrollverlauf sowie das Kontrollergebnis. Anzeigeneinrichtungen 5 bzw. Protokolleinrichtungen 6 können an der Kontrolleinrichtung 2 und/oder der die zu kontrollierenden Produkte herstellende Maschine 10 angeordnet werden.

Um eine rationelle Kontrolle durchzuführen, wird die Probenentnahme in Abhängigkeit vom Probenkontrollergebnis gesteuert, wenn letzteres dies erfordert oder ermöglicht. Ansonsten wird die Probenentnahme stückzahlmäßig und/oder zeitlich gesteuert.

Für den entsprechenden Vergleich der Musterbilder der Tabletten mit dem Referenzmuster muß letzteres für das zu prüfende Produktionsgut z.B. in den Speicher 29 eingelesen oder auf andere geeignete Weise aufgenommen werden und ggf. müssen zulässige Toleranzen festgelegt werden.

Folgende Fehler und Defekte können beispielsweise detektiert und ggf. durch eine nachfolgende Steuerung verhindert werden: Tabletten mit Verunreinigungen aus dem Granulat oder der Preßmasse (sichtbare Punkte oder Flecken), Tabletten, die durch Öldurchbrüche verunreinigt werden, Tabletten mit mechanischen Beschädigungen (Abrisse, Abscherungen, Deckelneigung), Tabletten, die durch Kleben an den Stempelflächen deformiert sind. Bei Tabletten, aber auch anderen Feststoffprodukten können allgemein u.a. Schmutz, Fremdkörper, Kratzer, Kantenbrüche, Schlitze, Risse, Materialfehlstellen, Löcher, Einbuchtungen, Biegungen, falsche Montage, falsche Farben, falsche Kennzeichnungen visuell detektiert werden.

## Patentansprüche

1. Kontrollsystem zum Prüfen von Feststoffprodukten auf visuell detektierbare Fehler, mit Zuführeinrichtungen zum Zuführen der zu kontrollierenden Produkte zu einer die Prüfung durchführenden Kontrolleinrichtung, wobei die Kontrollgeschwindigkeit der Produkte geringer ist als deren Produktionsgeschwindigkeit, dadurch **gekennzeichnet**, daß die Zuführeinrichtungen (3) eine Probenentnahmevorrichtung (31) zur Probenentnahme aus der laufenden Produktion enthalten.

2. Kontrollsystem nach Anspruch 1, dadurch **gekennzeichnet**, daß eine Steuereinrichtung (4) vorgesehen ist, mittels der die Produktion in Abhängigkeit vom Probenkontrollergebnis steuerbar ist.

3. Kontrollsystem nach Anspruch 2, dadurch **gekennzeichnet**, daß die Steuereinrichtung (4) zum Anhalten der Produktion in Abhängigkeit vom Probenkontrollergebnis ausgelegt ist.

4. Kontrollsystem nach Anspruch 2 oder 3, dadurch **gekennzeichnet**, daß die Steuereinrichtung (4) zum Beeinflussen von Produktionsparametern in Abhängigkeit vom Probenkontrollergebnis ausgelegt ist.

5. Kontrollsystem nach einem der Ansprüche 2 bis 4, dadurch **gekennzeichnet**, daß Anzeigeneinrichtungen (5) vorgesehen sind, mittels denen das Auftreten und/oder die Art der Produktionssteuerung durch die Steuereinrichtung (4) anzeigbar ist/sind.

6. Kontrollsystem nach einem der Ansprüche 2 bis 5, dadurch **gekennzeichnet**, daß Protokolleinrichtungen (6) vorgesehen sind, mittels denen das Auftreten und/oder die Art der Produktionssteuerung durch die Steuereinrichtung (4) protokollierbar ist/sind.

7. Kontrollsystem nach einem der vorhergehenden Ansprüche, dadurch **gekennzeichnet**, daß eine Puffereinrichtung (7) vorgesehen ist, mittels der die Produktion zumindest während der Durchführung der Kontrolle einer Probe pufferbar ist.

8. Kontrollsystem nach Anspruch 7, dadurch **gekennzeichnet**, daß eine Freigabesteuerung (8) vorgesehen ist, mittels der die Freigabe der in der Puffereinrichtung (7) gepufferten Produktion in Abhängigkeit vom Probenkontrollergebnis steuerbar ist.

9. Kontrollsystem nach Anspruch 8, dadurch **gekennzeichnet**, daß Anzeigeneinrichtungen (5) vorgesehen sind, mittels denen das Auftreten und/oder Parameter der Freigabe durch die Freigabesteuerung (8) anzeigbar ist/sind.

10. Kontrollsystem nach Anspruch 8 oder 9, dadurch **gekennzeichnet**, daß Protokolleinrichtungen (6) vorgesehen sind, mittels denen das Auftreten und/oder Parameter der Freigabe durch die Freigabesteuerung (8) protokollierbar ist/sind.

11. Kontrollsystem nach einem der Ansprüche 7 bis 10, dadurch **gekennzeichnet**, daß die Puffereinrichtungen (7) einen vorzugsweise gesteuert entleerbarer Zwischenbehälter (9) enthalten.

12. Kontrollsystem nach einem oder mehreren der Ansprüche 5, 6, 9 und 10, dadurch **gekennzeichnet**, daß die Anzeigeneinrichtungen (5) bzw. die Protokolleinrichtungen (6) an der Kontrolleinrichtung (2) und/oder einer die zu kontrollierenden Produkte herstellende Maschine (10) angeordnet sind.

13. Kontrollsystem nach einem der vorhergehenden Ansprüche, dadurch **gekennzeichnet**, daß eine Steuerung (32) für die Probenentnahmevorrichtung (31) vorgesehen ist.

14. Kontrollsystem nach Anspruch 13, dadurch **gekennzeichnet**, daß die Steuerung (32) eine Stückzahl- oder eine Zeitsteuereinrichtung (33) ist.

15. Kontrollsystem nach Anspruch 14, dadurch **gekennzeichnet**, daß die Zeitsteuereinrichtung (33) ausgelegt ist, die Dauer und/oder den Abstand von Probenentnahmen zeitlich zu steuern.

16. Kontrollsystem nach Anspruch 14 oder 15 dadurch **gekennzeichnet**, daß die Zeitsteuereinrichtung (33) ausgelegt ist, die Puffereinrichtung (7) so zu steuern, daß letztere die einer Probenentnahme zugeordnete Produktion identifizierbar puffert.

17. Kontrollsystem nach einem der vorhergehenden Ansprüche, dadurch **gekennzeichnet**, daß die Probenentnahmevorrichtung (31) eine in den Produktionsstrom einsetzbare Weiche (34) ist.

18. Kontrollsystem nach Anspruch 17, dadurch **gekennzeichnet**, daß die Weiche (34) eine Leitanordnung (35) enthält, die zum Ableiten von Proben aus dem Produktionsstrom (A) einstellbar ist.

19. Kontrollsystem nach Anspruch 17 oder 18, dadurch **gekennzeichnet**, daß die Weiche (34) mechanisch ist.

20. Kontrollsystem nach Anspruch 17 oder 18, dadurch **gekennzeichnet**, daß die Weiche (34) eine Luftstromanordnung enthält, die zum Ableiten von Proben aus dem Produktionsstrom (A) einstellbar ist.

21. Kontrollsystem nach einem der Ansprüche 17 bis 20, dadurch **gekennzeichnet**, daß die Weiche (34) zum horizontalen oder vertikalen Ableiten von Proben ausgelegt ist.

22. Kontrollsystem nach einem der Ansprüche 17 bis 21, dadurch **gekennzeichnet**, daß die Weiche (34) aus Edelstahl, V4A- oder V2A-Stahl und/oder lebensmittelechtem Kunststoff besteht.

23. Kontrollsystem nach einem der vorhergehenden Ansprüche, dadurch **gekennzeichnet**, daß die Zuführeinrichtungen (3) zumindest teilweise der Kontrolleinrichtung (2) zugeordnet sind.

24. Kontrollsystem nach einem der vorhergehenden Ansprüche, dadurch **gekennzeichnet**, daß die Steuereinrichtung (4) zumindest teilweise der Kontrolleinrichtung (2) zugeordnet ist.

25. Kontrollsystem nach einem der vorhergehenden Ansprüche, dadurch **gekennzeichnet**, daß die Freigabesteuerung (8) zumindest teilweise der Kontrolleinrichtung (2) zugeordnet ist.

26. Kontrollsystem nach einem der vorhergehenden Ansprüche, dadurch **gekennzeichnet**, daß die Zeitsteuereinrichtung (33) zumindest teilweise der Kontrolleinrichtung zugeordnet ist.

27. Kontrollsystem nach einem der vorhergehenden Ansprüche, dadurch **gekennzeichnet**, daß die Probenentnahmevorrichtung (31) zumindest teilweise durch die die zu kontrollierenden Produkte herstellende Maschine (10) und/oder eine externe Steuerung steuerbar ist.

28. Kontrolleinrichtung für ein Kontrollsystem nach einem der vorhergehenden Ansprüche, dadurch **gekennzeichnet**, daß sie eine Positioniereinrichtung (21), eine Prüfeinrichtung (20) und eine Auswerteeinrichtung (22) für die Proben enthält.

29. Kontrolleinrichtung nach Anspruch 28, dadurch **gekennzeichnet**, daß sie Fördereinrichtungen (23) enthält, die den Zuführeinrichtungen (3) zugeordnet und ausgelegt sind, der Positioniereinrichtung (21) zu prüfende Produkte von der Probenentnahmevorrichtung (31) zuzuführen.

30. Kontrolleinrichtung nach Anspruch 29, dadurch **gekennzeichnet**, daß die Fördereinrichtungen (23) einen Walzenförderer, ein Förderband, eine pneumatische Fördervorrichtung, eine Vakuumfördervorrichtung, ein Vibrationsblech, eine Direktzuführung und/oder einen Bürstenkasten enthalten.

31. Kontrolleinrichtung nach einem der Ansprüche 27 bis 29, dadurch **gekennzeichnet**, daß die Prüfeinrichtung (20) eine Erfassungseinrichtung (24) zum Aufnehmen des Aussehens der zu prüfenden Feststoffprodukte enthält.

32. Kontrolleinrichtung nach Anspruch 31, dadurch **gekennzeichnet**, daß die Erfassungseinrichtung (24) zumindest einen Zeilensensor (241) enthält.

33. Kontrolleinrichtung nach Anspruch 32, dadurch **gekennzeichnet**, daß die Erfassungseinrichtung (24) zumindest eine Videokamera (242) enthält.

34. Kontrolleinrichtung nach Anspruch 32 oder 33, dadurch **gekennzeichnet**, daß die Erfassungseinrichtung (24) zwei insbesondere örtlich getrennt angeordnete Zeilensensoren (241) bzw. Videokameras (242) enthält.

35. Kontrolleinrichtung nach einem der Ansprüche 32 bis 34, dadurch **gekennzeichnet**, daß der zumindest eine Zeilensensor (241) bzw. die zumindest eine Videokamera (242) in der Kontrolleinrichtung (2) ortsfest angeordnet ist.

36. Kontrolleinrichtung nach einem der Ansprüche 32 bis 34, dadurch **gekennzeichnet**, daß der zumindest eine Zeilensensor (241) bzw. die zumindest eine Videokamera (242) in der Kontrolleinrichtung (2) zum Positionieren relativ zu zu prüfenden Feststoffprodukten beim Prüfvorgang beweglich angeordnet ist.

37. Kontrolleinrichtung nach Anspruch 35 oder 36, dadurch **gekennzeichnet**, daß zu prüfende Feststoffprodukte mittels der Positioniereinrichtung (21) beim Prüfvorgang relativ zu dem zumindest einen Zeilensensor (241) bzw. der zumindest einen Videokamera (242) positionierbar sind.

38. Kontrolleinrichtung nach Anspruch 36 oder 37, dadurch **gekennzeichnet**, daß die Positioniereinrichtung (21) eine Probenaufnahmevorrichtung (31) enthält.

39. Kontrolleinrichtung nach Anspruch 38, dadurch **gekennzeichnet**, daß die Probenaufnahmevorrichtung (25) eine Platte mit Vertiefungen, wie Näpfen, oder Kammern, eine Kassettenkonstruktion, eine Sternradanordnung, eine Förderbandanordnung und/oder mechanische Arme enthält, die ggf. beim Prüfvorgang relativ zu dem zumindest einen Zeilensensor (241) bzw. der zumindest einen Videokamera (242) positionierbar ist/sind.

40. Kontrolleinrichtung nach Anspruch 38 oder 39, dadurch **gekennzeichnet**, daß die Positioniereinrichtung (21) eine Wendeeinrichtung (26) für Feststoffprodukte oder die Probenaufnahmevorrichtung (25) enthält, um Feststoffprodukte einzeln oder in Gruppen ganz oder teilweise zu wenden.

41. Kontrolleinrichtung nach Anspruch 40, dadurch **gekennzeichnet**, daß die Wendeeinrichtung (26) eine Niederhaltevorrichtung (27) enthält, die Feststoffprodukte beim Wenden an der Probenaufnahmevorrichtung (25) fixiert.

42. Kontrolleinrichtung nach Anspruch 40 oder 41, dadurch **gekennzeichnet**, daß die Wendeeinrichtung (26) und/oder die Niederhaltevorrichtung (27) mechanische Arme und/oder Druckeinrichtungen, wie Vakuummittel, zum Ausführen der Wendeoperation bzw. des Niederhaltens enthält.

43. Kontrolleinrichtung nach einem der Ansprüche 28 bis 42, dadurch **gekennzeichnet**, daß die Prüfeinrichtung (20) eine Vergleichseinrichtung (28) enthält, mittels der Abweichungen des von der Erfassungseinrichtung (24) aufgenommenen Aussehens der geprüften Feststoffprodukte von einer Referenz feststellbar sind.

44. Kontrolleinrichtung nach Anspruch 43, dadurch **gekennzeichnet**, daß ein Speicher (29) vorgesehen ist, in dem fehlerfreie und/oder mit Toleranzen versehene Muster als Referenz abspeicherbar sind.

45. Kontrolleinrichtung nach einem der Ansprüche 28 bis 44, dadurch **gekennzeichnet**, daß die Auswerteeinrichtung (22) mit der Vergleichseinrichtung (28) gekoppelt und ausgelegt ist, anhand der Ergebnisse der Vergleichseinrichtung (28) die Qualität der Produktion festzustellen.

46. Kontrolleinrichtung nach Anspruch 45, dadurch **gekennzeichnet**, daß die Auswerteeinrichtung (22) mit der Steuereinrichtung (4) gekoppelt oder koppelbar ist, um letztere zu veranlassen, die Produktion in Abhängigkeit vom Probenkontrollergebnis zu steuern.

47. Kontrolleinrichtung nach Anspruch 45 oder 46, dadurch **gekennzeichnet**, daß die Auswerteeinrichtung (22) mit der Freigabesteuerung (8) gekoppelt oder koppelbar ist, um letztere zu veranlassen, die gepufferte Produktion in Abhängigkeit vom Probenkontrollergebnis freizugeben.

48. Kontrolleinrichtung nach einem der Ansprüche 28 bis 47, dadurch **gekennzeichnet**, daß die Auswerteeinrichtung (22) mit der Steuerung (32) bzw. ggf. der Zeitsteuereinrichtung (33) der Probenentnahmevorrichtung (31) gekoppelt ist, um eine folgende Probenentnahme auszulösen.

49. Kontrolleinrichtung nach Anspruch 48, dadurch **gekennzeichnet**, daß die Steuerung (32) bzw. ggf. die Zeitsteuereinrichtung (33) ausgelegt ist, eine folgende Probenentnahme in Abhängigkeit vom gegenwärtigen Probenkontrollergebnis auszulösen.

50. Kontrolleinrichtung nach einem der Ansprüche 28 bis 49, dadurch **gekennzeichnet**, daß produktberührende Teile aus Edelstahl, V4A- oder V2A-Stahl und/oder lebensmittelechtem Kunststoff bestehen.

51. Kontrollverfahren zum Prüfen von Feststoffprodukten auf visuell detektierbare Fehler, wobei die zu kontrollierenden Produkte mittels Zuführeinrichtungen einer die Prüfung durchführenden Kontrolleinrichtung zugeführt werden und die Kontrollgeschwindigkeit der Produkte geringer ist als deren Produktionsgeschwindigkeit, dadurch **gekennzeichnet**, daß aus der laufenden Produktion über eine Probenentnahmevorrichtung (31) der Zuführeinrichtungen (3) Proben entnommen und der Kontrolleinrichtung (2) zur Überprüfung zugeführt werden.

52. Kontrollverfahren nach Anspruch 51, dadurch **gekennzeichnet**, daß die Produktion in Abhängigkeit vom Probenkontrollergebnis gesteuert wird.

53. Kontrollverfahren nach Anspruch 52, dadurch **gekennzeichnet**, daß in Abhängigkeit vom Probenkontrollergebnis die Produktion angehalten oder ihre Parameter beeinflußt werden.

54. Kontrollverfahren nach einem der Ansprüche 51 bis 53, dadurch **gekennzeichnet**, daß die Produktion zumindest während des Prüfvorgangs in einer Puffereinrichtung (7) gepuffert wird.

55. Kontrollverfahren nach Anspruch 54, dadurch **gekennzeichnet**, daß die gepufferte Produktion in Abhängigkeit vom Probenkontrollergebnis freigegeben wird.

56. Kontrollverfahren nach einem der Ansprüche 51 bis 56, dadurch **gekennzeichnet**, daß die Probenentnahme in Abhängigkeit vom Probenkontrollergebnis gesteuert wird.

57. Kontrollverfahren nach einem der Ansprüche 51 bis 56, dadurch **gekennzeichnet**, daß die Probenentnahme stückzahlmäßig und/oder zeitlich gesteuert wird.

58. Kontrollverfahren nach einem der Ansprüche 51 bis 57, dadurch **gekennzeichnet**, daß entnommene Proben über Fördereinrichtungen (23) einer Prüfeinrichtung (20) zur Prüfung zugeführt werden.

59. Kontrollverfahren nach Anspruch 58, dadurch **gekennzeichnet**, daß zu prüfende Feststoffprodukte durch die Fördereinrichtung (23) beim Prüfvorgang relativ zur Prüfeinrichtung (20) positioniert werden.

60. Kontrollverfahren nach Anspruch 58 oder 59, dadurch **gekennzeichnet**, daß zumindest ein Zeilensensor (241) oder eine Videokamera (242) der Prüfeinrichtung beim Prüfvorgang relativ zu zu prüfenden Feststoffprodukte positioniert wird.

61. Kontrollverfahren nach einem der Ansprüche 58 bis 60, dadurch **gekennzeichnet**, daß zu prüfenden Feststoffprodukte bei der Prüfung insbesondere zur Rückseiteninspektion einzeln oder in Gruppen gewendet werden.

62. Kontrollverfahren nach einem der Ansprüche 51 bis 61, dadurch **gekennzeichnet**, daß es mittels eines Kontrollsystems (1) nach einem der Ansprüche 1 bis 27 bzw. einer Kontrolleinrichtung (2) nach einem der Ansprüche 28 bis 50 durchgeführt wird.
